# FASCICULE DE BREVET EUROPEEN

(11) **EP 2 397 778 B1**
(45) Date de publication et mention de la délivrance du brevet: **25.07.2012**
(21) Numéro de dépôt: 10189813.8
(22) Date de dépôt: 03.11.2010
(51) Int. Cl.: F24D 3/08, F24D 12/02, F24D 19/10, F24H 1/50, F28D 20/00

(54) **Installation thermique**
Heizanlage
Thermal installation

(30) Priorité: 13.11.2009 FR 0957987
(43) Date de publication de la demande: 21.12.2011
(73) Titulaire: Atlantic Climatisation et Ventilation, 69330 Meyzieu (FR)
(72) Inventeur: Lepelletier, Yves, 85170 LE POIRE SUR VIE (FR); Clement, Jean François, 85000 LA ROCHE SUR YON (FR); Marie, Jean François, 62330 ISBERGUES (FR)
(74) Mandataire: Maureau, Philippe

(56) Documents cités:
- WO-A1-97/41395
- WO-A1-2008/130306
- DE-A1- 3 230 117
- DE-A1- 3 240 696
- DE-A1- 3 330 097
- DE-A1- 3 429 380

## Description

La présente invention se rapporte à une installation thermique ainsi qu'à un procédé de commande d'un générateur de chaleur équipant une telle installation thermique.

Le chauffage domestique (radiateurs et/ou plancher chauffant) et la production d'eau chaude sanitaire peuvent être assurés par un chauffage central produit par une pompe à chaleur utilisant l'air extérieur comme source froide. Or, une diminution de la température de l'air extérieur entraîne une diminution de la puissance fournie par la pompe à chaleur. Cette diminution de la puissance fournie peut être préjudiciable car les besoins de chauffage domestique sont alors importants.

A cet égard, il est connu de l'état de la technique d'associer un appoint électrique ou une chaudière d'appoint à la pompe à chaleur. Une telle association, malgré son efficacité, nécessite des connexions hydrauliques et électriques complexes, en particulier pour relier les échangeurs thermiques de la chaudière d'appoint et de la pompe à chaleur.

En outre, la chaudière d'appoint et la pompe à chaleur possèdent chacune une régulation indépendante, rendant donc complexe à mettre en oeuvre une démarche d'optimisation de leur association.

L'état de la technique est illustré par les documents DE3330097, DE3240696, DE 3230117 et W02008130306.

Le document DE3330097 décrit une installation thermique équipée d'un brûleur à gaz et d'une pompe à chaleur.

Le document WO02079707 décrit un accumulateur thermique comportant une pluralité d'échangeurs thermiques séparés entre eux par une paroi horizontale munie d'un orifice central et une source de chaleur interne.

Le document DE102009007053 décrit un procédé de régulation d'un système de chauffage d'eau destiné à chauffer un réservoir d'eau dans un environnement industriel.

Il est connu de l'état de la technique, notamment du document DE 32 40 696, d'équiper une installation thermique d'un générateur de chaleur pour le chauffage d'un fluide caloporteur comportant un corps de chauffe dans lequel circule le fluide caloporteur, le corps de chauffe présentant :
- un compartiment inférieur comprenant :
   un premier échangeur thermique appartenant au circuit d'une pompe à chaleur disposé dans la zone inférieure,
   un second échangeur thermique superposé au premier échangeur thermique, et relié à un système de chauffage à énergie fossile,
- un compartiment supérieur recevant un ballon d'eau chaude, le compartiment supérieur étant en communication avec le compartiment inférieur.

Ainsi, la présence des premier et second échangeurs thermiques dans un même corps de chauffe permet de s'affranchir de connexions hydrauliques et électriques complexes.

De plus, le transport de chaleur ascensionnel dans le fluide caloporteur par convection naturelle, depuis le premier échangeur thermique vers le second échangeur thermique, puis du second échangeur thermique vers la zone supérieure du compartiment inférieur du corps de chauffe, forme un étagement croissant de la température du fluide caloporteur qui permet le chauffage du liquide caloporteur dans le compartiment supérieur du corps du chauffe.

Un tel générateur de chaleur de l'état de la technique ne permet pas d'optimiser la production d'eau chaude dans le compartiment supérieur du corps de chauffe.

La présente invention vise à remédier à l'inconvénient précité et concerne une installation thermique comportant les caractéristiques de la revendication 1.

Ainsi, une telle installation thermique selon l'invention permet d'accroître le transfert de chaleur du compartiment inférieur vers le compartiment supérieur par une convection forcée via les premiers moyens de liaison s'additionnant à la convection naturelle depuis la zone supérieure du compartiment inférieur vers le compartiment supérieur.

La convection forcée est possible par une boucle formée par :
- l'agencement des moyens d'entrée du fluide caloporteur du compartiment supérieur reliés aux premiers moyens de liaison,
- l'agencement des premiers moyens de liaison reliés aux moyens de sortie du fluide caloporteur du compartiment inférieur du corps de chauffe,
- l'agencement des moyens de sortie du fluide dans une zone supérieure du compartiment inférieur du corps de chauffe.

La formation d'une telle boucle permet d'une part d'envisager une régulation unique de la température du fluide caloporteur dans la zone supérieure du compartiment inférieur du corps de chauffe, et permet d'autre part d'envisager une démarche d'optimisation aisée de la consommation énergétique à la fois de la pompe à chaleur et du système de chauffage.

Dans un mode de réalisation, les premiers moyens de liaison comportent une vanne trois voies présentant :
- une première voie orientée vers l'extrémité amont du circuit de chauffage domestique,
- une seconde voie orientée vers les moyens de sortie du fluide caloporteur du compartiment inférieur du corps de chauffe,

Ainsi, une telle pompe de circulation permet notamment d'accélérer le transfert de chaleur du compartiment inférieur vers le compartiment supérieur par une convection forcée via les premiers moyens de liaison.

Avantageusement, les compartiments supérieur et inférieur du corps de chauffe sont délimités par une paroi sensiblement horizontale munie d'un orifice central.

Ainsi, une telle paroi permet de favoriser la convection naturelle depuis la zone supérieure du compartiment inférieur vers le compartiment supérieur, afin de chauffer le ballon d'eau chaude sanitaire.

Selon une forme d'exécution, le système de chauffage relié au second échangeur thermique comprend un brûleur alimenté par une source d'énergie fossile telle que le fioul ou le gaz.

Ainsi, l'utilisation d'une énergie fossile permet d'obtenir une consommation énergétique modérée du système de chauffage dans la mesure où elle n'est utilisée que pour réaliser un chauffage d'appoint.

Selon une variante d'exécution, le système de chauffage relié au second échangeur thermique comprend un foyer alimenté par une source d'énergie fossile telle que le bois ou pellets.

Dans un mode de réalisation, l'installation thermique comprend en outre :
- des moyens de commande de la puissance de la pompe à chaleur et du système de chauffage,
- une première sonde thermique équipant les premiers moyens de liaison,
- une seconde sonde thermique équipant les seconds moyens de liaison,
- des moyens de régulation de la température du fluide caloporteur dans la zone supérieure du compartiment inférieur du corps de chauffe, les moyens de régulation étant reliés aux première et seconde sondes thermiques ainsi qu'aux moyens de commande de la puissance de la pompe à chaleur et du système de chauffage.

Ainsi, la présence de tels moyens de régulation permettent d'optimiser le fonctionnement de la pompe à chaleur et du système de chauffage en ne régulant qu'une seule et unique grandeur.

Selon une forme d'exécution, les moyens de régulation comprennent un régulateur de type Proportionnelle-Intégrale-Dérivée (PID).

Un régulateur PID permet d'obtenir une régulation de la température du fluide caloporteur robuste, rapide et précise.

La présente invention se rapporte également à un procédé de commande d'un générateur de chaleur équipant une installation thermique conforme à l'invention, remarquable en ce qu'il comprend les étapes successives consistant à :
a) commander la puissance d'une pompe à chaleur en lui assignant une température de consigne, notée Tc, du fluide caloporteur dans le circuit de chauffage domestique,
b) effectuer une première boucle de régulation de la température du fluide caloporteur, notée T, dans la zone supérieure du compartiment inférieur du corps de chauffe consistant à :
   b1) comparer la température détectée par la première sonde thermique, notée T1, avec Tc,
   b2) réguler la température T en commandant la puissance de la pompe à chaleur si T1 est différente de Tc,
   b3) comparer à nouveau T1 avec Tc,
   la première boucle de régulation étant effectuée tant que la température T est inférieure ou égale à la température maximale, notée Tmax, du fluide caloporteur en sortie de la pompe à chaleur correspondant à la puissance maximale de la pompe à chaleur, et ce jusqu'à ce que T1 soit égale à Tc,
c) effectuer une seconde boucle de régulation dès que la température T est supérieure à Tmax, consistant à :
   c1) comparer T1 avec Tc,
   c2) réguler la température T en commandant la puissance de la pompe à chaleur et la puissance du système de chauffage si T1 est différente de Tc,
   c3) comparer à nouveau T1 avec Tc,
la seconde boucle de régulation étant effectuée jusqu'à ce que T1 soit égale à Tc.

La présence de telles boucles de régulation permet d'optimiser à la fois le fonctionnement de la pompe à chaleur et le fonctionnement du système de chauffage.

De manière avantageuse, la seconde boucle de régulation comprend des étapes antérieures à c2) consistant à :
- comparer la température détectée par la seconde sonde thermique, notée T2, avec Tmax,
- arrêter la pompe à chaleur si Tmax, le cas échéant l'étape c2) consiste à réguler la température T en commandant seulement la puissance du système de chauffage si T1 est différente de Tc.

Ainsi, l'arrêt de la pompe à chaleur lorsque Tmax permet d'éviter une consommation énergétique superflue de la pompe à chaleur qui n'a plus aucune utilité dans le cas d'espèce.

L'invention sera bien comprise à l'aide de la description qui suit, en référence au dessin schématique annexé représentant à titre d'exemple non limitatif, une forme d'exécution de cette installation thermique.

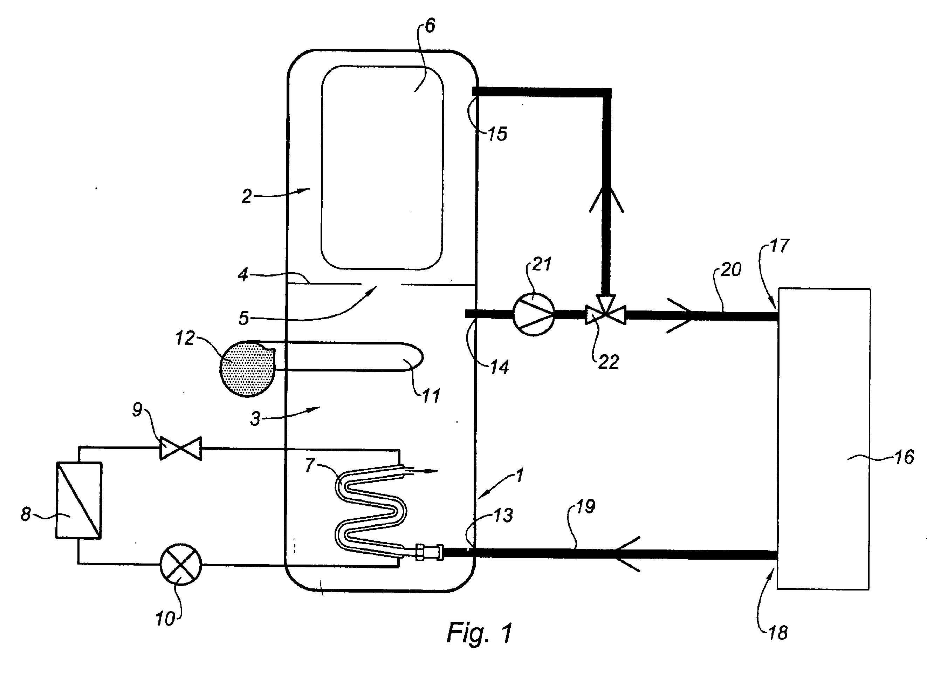

La figure 1 est une vue schématique fonctionnelle de cette installation thermique.

L'installation thermique illustrée à la figure 1 comprend un générateur de chaleur comportant un corps de chauffe 1 de forme sensiblement cylindrique dans lequel circule un fluide caloporteur (non représenté), tel que de l'eau associée ou non à un antigel.

Le corps de chauffe 1 présente un compartiment supérieur 2 et un compartiment inférieur 3 délimités par une paroi 4 sensiblement horizontale munie d'un orifice central 5.

Le compartiment supérieur 2 est pourvu d'un ballon 6 d'eau chaude sanitaire. Le compartiment inférieur 3 comprend un condenseur 7 à tubes coaxiaux présentant un tube interne dans lequel circule le fluide caloporteur, et un tube externe dans lequel circule un fluide frigorigène. Le condenseur 7 est disposé dans une zone inférieure du compartiment inférieur 3.

Le condenseur 7 appartient à un circuit thermodynamique d'une pompe à chaleur comportant un évaporateur 8, un détendeur 9 et un compresseur 10. L'installation thermique comporte également des moyens de commande de la puissance de la pompe à chaleur 7, 8, 9, 10 (non représentés).

Le compartiment inférieur 3 comprend en outre un échangeur thermique 11 superposé au condenseur 7, et relié à un brûleur 12 alimenté par une source d'énergie fossile telle que le fioul ou le gaz. L'installation thermique comporte également des moyens de commande de la puissance du brûleur 12 (non représentés).

En outre, le compartiment inférieur 3 est muni d'un orifice de raccordement inférieur 13 et d'un orifice de raccordement supérieur 14 ménagés respectivement dans la zone inférieure et une zone supérieure du compartiment inférieur 3, formant respectivement des moyens d'entrée et de sortie du fluide caloporteur.

Le compartiment supérieur 2 est également muni d'un orifice de raccordement 15 ménagé dans une zone supérieure du compartiment supérieur 2.

L'installation thermique comprend en outre un circuit de chauffage domestique 16 comportant des radiateurs et/ou un plancher chauffant (non représentés), le circuit de chauffage domestique 16 présentant une extrémité amont 17 et une extrémité aval 18.

L'extrémité aval 18 du circuit de chauffage domestique 16 est reliée au compartiment inférieur 3 du corps de chauffe 1 par une conduite retour 19 traversant l'orifice de raccordement inférieur 13 et débouchant dans le tube interne du condenseur 7.

L'extrémité amont 17 du circuit de chauffage domestique 16 est reliée au compartiment inférieur 3 du corps de chauffe 1 par une conduite aller 20 équipée d'amont en aval d'une pompe de circulation 21 du fluide caloporteur et d'une vanne trois voies 22.

La vanne trois voies 22 présente une première voie orientée vers l'extrémité amont 17 du circuit de chauffage domestique 16. La vanne trois voies 22 présente en outre une seconde voie orientée vers l'orifice de raccordement supérieur 14 du compartiment inférieur 3 du corps de chauffe 1. De plus, la vanne trois voies 22 présente une troisième orientée vers l'orifice de raccordement 15 du compartiment supérieur 2 du corps de chauffe 1.

Par ailleurs, l'installation thermique comporte un régulateur de type Proportionnelle-Intégrale-Dérivée (non représenté) relié aux moyens de commande de la puissance de la pompe à chaleur 7, 8, 9, 10 et du brûleur 12, ainsi qu'à une première sonde thermique (non représentée), disposée dans la conduite aller 20, et une seconde sonde thermique (non représentée), disposée dans la conduite retour 19.

Le procédé de commande du générateur de chaleur équipant cette installation thermique comprend les étapes successives consistant à :
a) commander la puissance de la pompe à chaleur 7, 8, 9, 10 en lui assignant une température de consigne Tc du fluide caloporteur dans le circuit de chauffage domestique 16,
b) effectuer une première boucle de régulation de la température du fluide caloporteur T dans la zone supérieure du compartiment inférieur 3 du corps de chauffe 1 consistant à :
   b1) comparer la température détectée par la première sonde thermique T1 avec Tc,
   b2) réguler la température T en commandant la puissance de la pompe à chaleur 7, 8, 9, 10 si T1 est différente de Tc,
   b3) comparer à nouveau T1 avec Tc,
   la première boucle de régulation étant effectuée tant que la température T est inférieure ou égale à la température maximale (Tmax) du fluide caloporteur en sortie du condenseur 7 correspondant à la puissance maximale de la pompe à chaleur 7, 8, 9, 10, et ce jusqu'à ce que T1 soit égale à Tc,
c) effectuer une seconde boucle de régulation dès que la température T est supérieure à Tmax, consistant à :
   c1) comparer T1 avec Tc,
   c2) comparer la température détectée par la seconde sonde thermique (T2) avec Tmax, puis
      - arrêter la pompe à chaleur 7, 8, 9, 10 si Tmax, le cas échéant réguler la température T en commandant seulement la puissance du brûleur 12 si T1 est différente de Tc,
      - si T2≤Tmax, réguler la température T en commandant la puissance de la pompe à chaleur 7, 8, 9, 10 et la puissance du brûleur 12 si T1 est différente de Tc,
   c3) comparer à nouveau T1 avec Tc,
la seconde boucle de régulation étant effectuée jusqu'à ce que T1 soit égale à Tc.

Bien entendu, la forme d'exécution de l'invention décrite ci-dessus ne présente aucun caractère limitatif. Des détails et améliorations peuvent y être apportés dans d'autres variantes d'exécution sans pour autant sortir du cadre de l'invention.

## Revendications

1. Installation thermique comportant :
- un générateur de chaleur pour le chauffage d'un fluide caloporteur comportant un corps de chauffe (1) dans lequel circule le fluide caloporteur, le corps de chauffe (1) présentant :
• un compartiment inférieur (3) comprenant :
des moyens d'entrée et de sortie (13, 14) du fluide caloporteur,
un premier échangeur thermique (7) appartenant au circuit d'une pompe à chaleur (8, 9, 10) disposé dans la zone inférieure,
un second échangeur thermique (11) superposé au premier échangeur thermique (7), et relié à un système de chauffage (12), de préférence un système de chauffage à énergie fossile,
• un compartiment supérieur (2) destiné à recevoir un ballon (6) d'eau chaude sanitaire, le compartiment supérieur (2) étant en communication avec le compartiment inférieur, comprenant :
- un circuit de chauffage domestique (16) présentant une extrémité amont (17) et une extrémité aval (18),
- des premiers moyens de liaison (20) reliant l'extrémité amont (17) du circuit de chauffage domestique (16) aux moyens de sortie (14) du fluide caloporteur du compartiment inférieur (3) du corps de chauffe (1),
- des seconds moyens de liaison (19) reliant l'extrémité aval (18) du circuit de chauffage domestique (16) aux moyens d'entrée (13) du fluide caloporteur du compartiment inférieur (3) du corps de chauffe (1),
l'installation thermique étant **caractérisée en ce que** le compartiment supérieure (2) comprend des moyens d'entrée (15) du fluide caloporteur reliés aux premiers moyens de liaison (20), et
**en ce que** les moyens d'entrée et de sortie (13, 14) du fluide caloporteur du compartiment inférieur (3) sont disposés respectivement dans une zone inférieure et une zone supérieure du compartiment inférieur (3).

2. Installation thermique selon la revendication 1, **caractérisée en ce que** les premiers moyens de liaison (20) comportent une vanne trois voies (22) présentant :
- une première voie orientée vers l'extrémité amont (17) du circuit de chauffage domestique (16),
- une seconde voie orientée vers les moyens de sortie (14) du fluide caloporteur du compartiment inférieur (3) du corps de chauffe (1),
- une troisième voie orientée vers les moyens d'entrée (15) du fluide caloporteur du compartiment supérieur (2) du corps de chauffe (1).

3. Installation thermique selon la revendication 1 ou 2, **caractérisée en ce que** les premiers moyens de liaison (20) comportent une pompe de circulation (21) du fluide caloporteur agencée pour accélérer le déplacement du fluide caloporteur depuis les moyens de sortie (14) du compartiment inférieur (3) du corps de chauffe (1).

4. Installation thermique selon l'une des revendications 1 à 3, **caractérisée en ce que** les compartiments supérieur et inférieur (2, 3) du corps de chauffe (1) sont délimités par une paroi (4) sensiblement horizontale munie d'un orifice central (5).

5. Installation thermique selon l'une des revendications 1 à 4, **caractérisée en ce que** le système de chauffage relié au second échangeur thermique (11) comprend un brûleur (12) alimenté par une source d'énergie fossile telle que le fioul ou le gaz.

6. Installation thermique selon l'une des revendications 1 à 4, **caractérisée en ce que** le système de chauffage relié au second échangeur thermique (11) comprend un foyer alimenté par une source d'énergie fossile telle que le bois ou pellets.

7. Installation thermique selon l'une des revendications 1 à 6, **caractérisée en ce qu'**elle comprend en outre :
- des moyens de commande de la puissance de la pompe à chaleur (7, 8, 9, 10) et du système de chauffage (12),
- une première sonde thermique équipant les premiers moyens de liaison (20),
- une seconde sonde thermique équipant les seconds moyens de liaison (19),
- des moyens de régulation de la température du fluide caloporteur dans la zone supérieure du compartiment inférieur (3) du corps de chauffe (1), les moyens de régulation étant reliés aux première et seconde sondes thermiques ainsi qu'aux moyens de commande de la puissance de la pompe à chaleur (7, 8, 9, 10) et du système de chauffage (12).

8. Installation thermique selon la revendication 7, **caractérisée en ce que** les moyens de régulation comprennent un régulateur de type Proportionnelle-Intégrale-Dérivée.

9. Procédé de commande d'un générateur de chaleur équipant une installation thermique selon la revendication 7 ou 8, **caractérisé en ce qu'**il comprend les étapes successives consistant à :
a) commander la puissance de la pompe à chaleur (7, 8, 9, 10) en lui assignant une température de consigne (Tc) du fluide caloporteur dans le circuit de chauffage domestique (16),
b) effectuer une première boucle de régulation de la température du fluide caloporteur (T) dans la zone supérieure du compartiment inférieur du corps de chauffe (1) consistant à :
b1) comparer la température détectée par la première sonde thermique (T1) avec Tc,
b2) réguler la température T en commandant la puissance de la pompe à chaleur (7, 8, 9, 10) si T1 est différente de Tc,
b3) comparer à nouveau T1 avec Tc,
la première boucle de régulation étant effectuée tant que la température T est inférieure ou égale à la température maximale (Tmax) du fluide caloporteur en sortie de la pompe à chaleur (7, 8, 9, 10) correspondant à la puissance maximale de la pompe à chaleur (7, 8, 9, 10), et ce jusqu'à ce que T1 soit égale à Tc,
c) effectuer une seconde boucle de régulation dès que la température T est supérieure à Tmax, consistant à :
c1) comparer T1 avec Tc,
c2) réguler la température T en commandant la puissance de la pompe à chaleur (7, 8, 9, 10) et la puissance du système de chauffage (12) si T1 est différente de Tc,
c3) comparer à nouveau T1 avec Tc,
la seconde boucle de régulation étant effectuée jusqu'à ce que T1 soit égale à Tc.

10. Procédé selon la revendication 9, **caractérisé en ce que** la seconde boucle de régulation comprend des étapes antérieures à c2) consistant à :
- comparer la température détectée par la seconde sonde thermique (T2) avec Tmax,
- arrêter la pompe à chaleur (7, 8, 9, 10) si T2>Tmax, le cas échéant l'étape c2) consiste à réguler la température T en commandant seulement la puissance du système de chauffage (12) si T1 est différente de Tc.

## Claims

1. A thermal insulation, including:
- a heat generator for heating a heat transfer fluid, including a heating body (1), in which the heat transfer fluid circulates, the heating body (1) having:
a lower compartment (3) comprising:
means (13, 14) for inflow and outflow of the heat transfer fluid,
a first heat exchanger (7) belonging to the circuit of a heat pump (8, 9, 10) positioned in the lower area,
a second heat exchanger (11) superposed to the first heat exchanger (7), and connected to a heating system (12), preferably a fossil fuel heating system,
an upper compartment (2) intended to receive a domestic hot water tank (6), the upper compartment (2) communicating with the lower compartment, comprising:
- a domestic heating circuit (16) having an upstream end (17) and a downstream end (18),
- first connecting means (20) connecting the upstream end (17) of the domestic heating circuit (16) to the means (14) for outflow of the heat transfer fluid of the lower compartment (3) of the heating body (1),
- second connecting means (19) connecting the downstream end (18) of the domestic heating circuit (16) to the means (13) for inflow of the heat transfer fluid of the lower compartment (3) of the heating body (1),
the thermal insulation being **characterized in that** the upper compartment (2) comprises means (15) for inflow of the heat transfer fluid connected to the first connecting means (20), and
**in that** the means (13, 14) for inflow and outflow of the heat transfer fluid of the lower compartment (3) are positioned in a lower area and an upper area of the lower compartment (3), respectively.

2. The thermal installation according to claim 1, **characterized in that** the first connecting means (20) include a three-way valve (22) having:
- a first way oriented towards the upstream end (17) of the domestic heating circuit (16),
- a second away oriented towards the heat transfer fluid outflow means (14) of the lower compartment (3) of the heating body (1),
- a third way oriented towards the heat transfer fluid inflow means (15) of the upper compartment (2) of the heating body (1).

3. The thermal installation according to claim 1 or 2, **characterized in that** the first connecting means (20) include a pump (21) for circulating the heat transfer fluid, laid out for accelerating the displacement of the heat transfer fluid from the outflow means (14) of the lower compartment (3) of the heating body (1).

4. The thermal installation according to one of claims 1 to 3, **characterized in that** the upper and lower compartments (2, 3) of the heating body (1) are delimited by a substantially horizontal wall (4) provided with a central orifice (5).

5. The thermal installation according to one of claims 1 to 4, **characterized in that** the heating system connected to the second heat exchanger (11) comprises a burner (12) fed by a fossil energy source such as fuel or gas.

6. The thermal installation according to one of claims 1 to 4, **characterized in that** the heating system connected to the second heat exchanger (11) comprises a hearth fed by a fossil energy source such as wood or pellets.

7. The thermal installation according to one of claims 1 to 6, **characterized in that** it further comprises:
- means for controlling the power of the heat pump (7, 8, 9, 10) and of the heating system (12),
- a first thermal probe with which the first connecting means (20) are equipped,
- a second thermal probe with which the second connecting means (19) are equipped,
- means for regulating the temperature of the heat transfer fluid in the upper area of the lower compartment (3) of the heating body (1), the regulation means being connected to the first and second thermal probes as well as to the means for controlling the power of the heat pump (7, 8, 9, 10) and of the heating system (12).

8. The thermal installation according to claim 7, **characterized in that** the regulation means comprise a regulator of the proportional-integral-derivative (PID) type.

9. A method for controlling a heat generator with which a thermal installation is equipped, according to claim 7 or 8, **characterized in that** it comprises the following steps consisting of:
a) controlling the power of the heat pump (7, 8, 9, 10) by ascribing to it a set temperature value (Tc) of the heat transfer fluid in the domestic heating circuit (16),
b) carrying out a first loop for regulating the temperature of the heat transfer fluid (T) in the upper area of the lower compartment of the heating body (1) consisting of:
b1) comparing the temperature detected by the first thermal probe (T1) with Tc,
b2) regulating the temperature T by controlling the power of the heat pump (7, 8, 9, 10) if T1 is different from Tc,
b3) again comparing T1 with Tc,
the first control loop being carried out as long as the temperature T is less than or equal to the maximum temperature (Tmax) of the heat transfer fluid at the outlet of the heat pump (7, 8, 9, 10), corresponding to the maximum power of the heat pump (7, 8, 9, 10), and this until T1 is equal to Tc,
c) carrying out a second control loop as soon as the temperature T is greater than Tmax, consisting of:
c1) comparing T1 with Tc,
c2) regulating the temperature T by controlling the power of the heat pump ((7, 8, 9, 10) and the power of the heating system (12) if T1 is different from Tc,
c3) again comparing T1 with Tc,
the second control loop being carried out until T1 is equal to Tc.

10. The method according to claim 9, **characterized in that** the second control loop comprises steps prior to c2) consisting of:
- comparing the temperature detected by the second thermal probe (T2) with Tmax,
- stopping the heat pump (7, 8, 9, 10) if T2>Tmax, if required, step c2) consists of regulating the temperature T by only controlling the power of the heating system (12) ifT1 is different from Tc.

## Patentansprüche

1. Thermische Anlage, aufweisend:
- einen Wärmegenerator zum Erwärmen eines Wärmeträgermediums, der einen Heizkörper (1) umfasst, in dem das Wärmeträgermedium zirkuliert, wobei der Heizkörper (1) aufweist:
• ein unteres Abteil (3), umfassend:
Eingangs- und Ausgangsmittel (13, 14) des Wärmeträgermediums, wobei ein erster Wärmetauscher (7), der zum Kreis einer Wärmepumpe (8, 9, 10) gehört, in der unteren Zone angeordnet ist,
einen zweiten Wärmetauscher (11) über dem ersten Wärmetauscher (7), der mit einem Heizsystem (12), vorzugsweise einem Heizsystem mit fossiler Energie, verbunden ist,
• ein oberes Abteil (2), das dazu bestimmt ist, einen Warmwasserbehälter (6) aufzunehmen, wobei das obere Abteil (2) mit dem unteren Abteil in Kommunikation ist, umfassend:
- einen Hausheizkreis (16), der ein oberstromiges Ende (17) und ein unterstromiges Ende (18) aufweist,
- erste Verbindungsmittel (20), die das oberstromige Ende (17) des Hausheizkreises (16) mit den Ausgangsmitteln (14) des Wärmeträgermediums des unteren Abteils (3) des Heizkörpers (1) verbinden,
- zweite Verbindungsmittel (19), die das unterstromige Ende (18) des Hausheizkreises (16) mit den Eingangsmitteln (13) des Wärmeträgermediums des unteren Abteils (3) des Heizkörpers (1) verbinden,
wobei die thermische Anlage **dadurch gekennzeichnet ist, dass** das obere Abteil (2) Eingangsmittel (15) des Wärmeträgermediums umfasst, die mit den ersten Verbindungsmitteln (20) verbunden sind, und
dass die Eingangs- und Ausgangsmittel (13, 14) des Wärmeträgermediums des unteren Abteils (3) jeweils in einer unteren Zone und einer oberen Zone des unteren Abteils (3) angeordnet sind.

2. Thermische Anlage nach Anspruch 1, **dadurch gekennzeichnet, dass** die ersten Verbindungsmittel (20) ein Dreiwegeventil (22) umfassen, das aufweist:
- einen ersten Weg, der zum oberstromigen Ende (17) des Hausheizkreises (16) gerichtet ist,
- einen zweiten Weg, der zu den Ausgangsmitteln (14) des Wärmeträgermediums des unteren Abteils (3) des Heizkörpers (1) gerichtet ist,
- einen dritten Weg, der zu den Eingangsmitteln (15) des Wärmeträgermediums des oberen Abteils (2) des Heizkörpers (1) gerichtet ist.

3. Thermische Anlage nach Anspruch 1 oder 2, **dadurch gekennzeichnet, dass** die ersten Verbindungsmittel (20) eine Zirkulationspumpe (21) des Wärmeträgermediums aufweisen, die ausgebildet ist, um die Bewegung des Wärmeträgermediums von den Ausgangsmitteln (14) des unteren Abteils (3) des Heizkörpers (1) zu beschleunigen.

4. Thermische Anlage nach einem der Ansprüche 1 bis 3, **dadurch gekennzeichnet, dass** das obere und untere Abteil (2, 3) des Heizkörpers (1) von einer etwa waagerechten Wand (4) begrenzt sind, die mit einer zentralen Öffnung (5) ausgestattet ist.

5. Thermische Anlage nach einem der Ansprüche 1 bis 4, **dadurch gekennzeichnet, dass** das mit dem zweiten Wärmetauscher (11) verbundene Heizsystem einen Brenner (12) umfasst, der von einer fossilen Energiequelle versorgt wird, wie beispielsweise Heizöl oder Gas.

6. Thermische Anlage nach einem der Ansprüche 1 bis 4, **dadurch gekennzeichnet, dass** das mit dem zweiten Wärmetauscher (11) verbundene Heizsystem einen Feuerraum umfasst, der von einer fossilen Energiequelle versorgt wird, wie beispielsweise Holz oder Pellets.

7. Thermische Anlage nach einem der Ansprüche 1 bis 6, **dadurch gekennzeichnet, dass** sie ferner umfasst:
- Steuermittel der Leistung der Wärmepumpe (7, 8, 9, 10) und des Heizsystems (12),
- eine erste Wärmesonde, die ersten Verbindungsmittel (20) ausrüstet,
- eine zweite Wärmesonde, die die zweiten Verbindungsmittel (19) ausrüstet,
- Regulierungsmittel der Temperatur des Wärmeträgermediums in der oberen Zone des unteren Abteils (3) des Heizkörpers (1), wobei die Regulierungsmittel mit der ersten und zweiten Wärmesonde sowie mit den Steuermitteln der Leistung der Wärmepumpe (7, 8, 9, 10) und des Heizsystems (12) verbunden sind.

8. Thermische Anlage nach Anspruch 7, **dadurch gekennzeichnet, dass** die Regulierungsmittel einen Regler vom Typ PID umfassen.

9. Steuerungsverfahren eines Wärmegenerators, der eine thermische Anlage nach Anspruch 7 oder 8 ausrüstet, **dadurch gekennzeichnet, dass** es die aufeinanderfolgenden Schritte umfasst, die darin bestehen:
a) Steuerung der Leistung der Wärmepumpe (7, 8, 9, 10) durch Zuweisung einer Referenztemperatur (Tc) des Wärmeträgermediums im Hausheizkreis (16),
b) Durchführung einer ersten Regelschleife der Temperatur des Wärmeträgermediums (T) in der oberen Zone des unteren Abteils des Heizkörpers (1), bestehend aus:
b1) Vergleich der von der ersten Wärmesonde (T1) festgestellten Temperatur mit Tc,
b2) Regulierung der Temperatur T durch Steuerung der Leistung der Wärmepumpe (7, 8, 9, 10), wenn T1 von Tc abweicht,
b3) erneuter Vergleich von T1 mit Tc,
wobei die erste Regelschleife durchgeführt wird, sobald die Temperatur T kleiner oder gleich der maximalen Temperatur (Tmax) des Wärmeträgermediums am Ausgang der Wärmepumpe (7, 8, 9, 10) ist, was der maximalen Leistung der Wärmepumpe (7, 8, 9, 10) entspricht, und das, bis T1 gleich Tc ist,
c) Durchführung einer zweiten Regelschleife, sobald die Temperatur T höher als Tmax ist, bestehend aus:
c1) Vergleich von T1 mit Tc,
c2) Regulierung der Temperatur T durch Steuerung der Leistung der Wärmepumpe (7, 8, 9, 10) und der Leistung des Heizsystems (12), wenn T1 von Tc abweicht,
c3) erneuter Vergleich von T1 mit Tc,
wobei die zweite Regelschleife durchgeführt wird, bis T1 gleich Tc ist.

10. Verfahren nach Anspruch 9, **dadurch gekennzeichnet, dass** die zweite Regelschleife die Schritte vor c2) umfasst, bestehend aus:
- Vergleich der von der zweiten Wärmesonde (T2) festgestellten Temperatur mit Tmax,
- Anhalten der Wärmepumpe (7, 8, 9, 10), wenn T2 > Tmax, wobei gegebenenfalls Schritt c2) darin besteht, die Temperatur T durch alleiniges Steuern der Leistung des Heizsystems (12) zu regeln, wenn T1 von Tc abweicht.
